# DEMANDE DE BREVET EUROPEEN

(11) **EP 2 034 250 A2**
(43) Date de publication de la demande: **11.03.2009**
(21) Numéro de dépôt: 08290838.5
(22) Date de dépôt: 05.09.2008
(51) Int. Cl.: F24J 2/04, F24J 2/40

(54) **Dispositif de transfert thermique à surface d'absorption variable**

(30) Priorité: 10.09.2007 FR 0706318
(71) Demandeur: Masa-Therm SA, 2000 Neuchätel (CH)
(72) Inventeur: Rylewski, Eugeniusz, 78470 Saint Remy les Chevreuse (FR)
(74) Mandataire: Bezault, Jean

(57) **Abrégé**

Le dispositif de transfert thermique comprend une surface à absorption variable (20) interposée entre une paroi transparente (12) et un module isolant (14), ladite surface à absorption variable (20) étant exposée au rayonnement solaire au travers de la paroi transparente (12) et présentant des régions absorbantes (20A) et des régions réfléchissantes (20R), ainsi que des volets mobiles (22) disposés en regard de la surface à absorption variable (20) et présentant chacun une face absorbante (22A) et/ou une face réfléchissante (22R), ces volets étant déplaçables entre au moins une première position et une deuxième position pour faire varier les régions absorbantes et/ou les régions réfléchissantes ainsi que les faces absorbantes et/ou les faces réfléchissantes exposées au rayonnement solaire. L'invention s'applique au domaine du bâtiment.

## Description

L'invention concerne un dispositif de transfert thermique comprenant une paroi transparente en contact avec une première masse thermique et propre à être exposée au rayonnement solaire, un module isolant placé entre la paroi transparente et une seconde masse thermique à chauffer ou refroidir, le module isolant comportant des passages de circulation pour un fluide caloporteur autorisant ou non un transfert thermique entre la première et la seconde masse thermique.

Des dispositifs de transfert thermique de ce genre sont connus notamment d'après EP 1 060 353 et EP 1 216 388 au nom de la Demanderesse.

Ces dispositifs connus sont utilisés en particulier pour transférer de la chaleur entre une paroi transparente exposée au rayonnement solaire et une autre paroi, telle que par exemple un mur ou une toiture d'un bâtiment, un réservoir d'eau, etc. En ce cas, la première masse thermique est l'air ambiant extérieur, tandis que l'autre masse thermique est le bâtiment, le réservoir, etc.

De tels dispositifs de transfert thermique ont l'avantage de pouvoir non seulement transférer de la chaleur provenant du rayonnement solaire vers la seconde masse thermique, mais aussi d'empêcher un transfert thermique en sens inverse lorsque le rayonnement solaire a cessé. Autrement dit, dans cette dernière situation, ce dispositif se comporte comme un isolant empêchant un transfert thermique de la seconde masse thermique qui a été réchauffée vers la première masse thermique qui se trouve alors à une température plus basse.

Dans EP 1 060 353, le module isolant comporte des passages de circulation pour un fluide caloporteur, habituellement de l'air, qui autorisent une circulation forcée utilisant un ventilateur.

Dans EP 1 216 388, les passages de circulation autorisent une circulation du fluide caloporteur par convexion naturelle, sans qu'il soit besoin de faire appel à un ventilateur ou analogue.

L'invention vise à améliorer encore le fonctionnement des dispositifs de transfert thermique de ce genre, aussi bien dans la situation de transfert thermique de la première masse thermique vers la seconde masse thermique, que dans la situation où la seconde masse thermique doit être isolée pour empêcher un transfert thermique de cette seconde masse thermique vers la première masse thermique.

L'invention propose à cet effet un dispositif de transfert thermique du type défini précédemment, lequel comprend une surface à absorption variable interposée entre la paroi transparente et le module isolant, ladite surface à absorption variable étant exposée au rayonnement solaire au travers de la paroi transparente et présentant des régions absorbantes et/ou des régions réfléchissantes, ainsi que des volets mobiles disposés en regard de la surface à absorption variable et présentant chacun une face absorbante et/ou une face réfléchissante, ces volets étant déplaçables entre au moins une première position et une deuxième position pour faire varier les régions absorbantes et/ou les régions réfléchissantes ainsi que les faces absorbantes et/ou les faces réfléchissantes, exposées au rayonnement solaire.

Ainsi, en fonction de la position des volets mobiles, l'ensemble formé par la surface à absorption variable et par les volets mobiles offre une surface exposée au rayonnement solaire qui est soit complètement absorbante, soit complètement réfléchissante, soit encore à la fois absorbante et réfléchissante.

Dans le premier cas, l'ensemble absorbe le rayonnement solaire du fait que sont exposées à la fois des régions absorbantes de la surface à absorption variable et des faces absorbantes des volets.

Dans le deuxième cas, l'ensemble offre une surface réfléchissante du fait que sont exposées à la fois des régions réfléchissantes de la surface à absorption variable et des faces réfléchissantes des volets.

Dans le troisième cas, l'ensemble offre une surface à la fois absorbante et réfléchissante du fait que sont exposées à la fois des régions absorbantes et réfléchissantes de la surface à absorption variable et des faces absorbantes et réfléchissantes des volets. Une telle solution mixte peut avoir pour une implantation du dispositif dans certains pays en fonction des conditions climatiques qui y règnent.

Il en résulte que dans la première position (position absorbante) la surface à absorption variable se comporte comme un absorbant vis-à-vis du rayonnement solaire, tandis que dans la deuxième position (position réfléchissante), cette surface se comporte comme une surface réfléchissante.

Dans un mode de réalisation préféré, la surface à absorption variable présente des régions absorbantes alternant avec des régions réfléchissantes, tandis que les volets mobiles présentent chacun une face absorbante et une face réfléchissante opposées, ces volets étant déplaçables entre une première position, dite position absorbante, où sont exposées les faces absorbantes des volets et les régions absorbantes de la surface à absorption variable et une deuxième position, dite position réfléchissante, où sont exposées les faces réfléchissantes respectives des volets et les régions réfléchissantes de la surface à absorption variable.

Il est avantageux que, dans la première position, les faces réfléchissantes des volets viennent en vis-à-vis des régions réfléchissantes de la surface à absorption variable pour les occulter, tandis que, dans la deuxième position, les faces absorbantes des volets viennent en vis-à-vis des régions absorbantes de la surface à absorption variable pour les occulter.

Bien que différentes configurations soient possibles, il est avantageux que les régions absorbantes et les régions réfléchissantes de la surface à absorption variable soient réalisées sous la forme de bandes parallèles de largeur choisie s'étendant suivant une direction principale, par exemple verticale ou horizontale, et que les volets mobiles soient montés pivotants autour d'axes respectifs parallèles à la direction principale.

Dans un mode de réalisation avantageux, les volets sont propres à pivoter chacun de sensiblement 180° de la première position à la deuxième position, ou inversement, en sorte que dans la première position chaque volet viennent occulter une région réfléchissante de la surface à absorption variable et que, dans la deuxième position, chaque volet vienne occulter une région absorbante immédiatement adjacente à ladite région réfléchissante.

Le qualificatif « absorbant » entend désigner une région de la surface à absorption variable ou une face d'un volet qui est capable d'absorber le rayonnement solaire par des propriétés analogues à celles du corps noir.

Au contraire, le qualificatif « réfléchissant » entend désigner une région de la surface à absorption variable ou une face d'un volet qui réfléchit ou renvoie le rayonnement solaire afin de ne pas absorber ce rayonnement.

De manière préférentielle, les régions absorbantes de la surface à absorption variable et les faces absorbantes des volets sont en une couleur foncée, en particulier une couleur noire, tandis que les régions réfléchissantes de la surface à absorption variable et les faces réfléchissantes des volets sont en une couleur claire, en particulier une couleur blanche.

Bien entendu, l'invention n'entend pas se limiter à l'utilisation d'une couleur foncée ou d'une couleur claire pour définir respectivement une propriété absorbante ou une propriété réfléchissante.

Les volets mobiles peuvent être montés pivotants, comme mentionné plus, mais ils peuvent aussi se déplacer d'une autre façon, en particulier par coulissement ou translation. En ce cas ils présenteront une seule face exposée au rayonnement solaire qui sera soit absorbante, soit réfléchissante.

Dans la description détaillée qui suit, faite seulement à titre d'exemple, on se réfère aux dessins annexés, sur lesquels :
- la figure 1 est une vue partielle en coupe d'un dispositif de transfert thermique selon l'invention dont les volets sont dans une première position, ici une position absorbante ;
- la figure 2 est une vue analogue à la figure 1 dans laquelle les volets sont dans une position intermédiaire ;
- la figure 3 est une vue analogue aux figures 1 et 2 dans laquelle les volets sont dans une deuxième position, ici une position réfléchissante ;
- la figure 4 est une vue partielle de face d'un dispositif de transfert thermique dans une première forme de réalisation de l'invention, dont les volets sont représentés en position absorbante ;
- la figure 5 est une vue en coupe suivant la ligne V-V de la figure 4 ;
- la figure 6 est une vue en coupe suivant la ligne VI-VI de la figure 4 ;
- la figure 7 est une vue en coupe suivant la ligne VII-VII de la figure 4 ;
- la figure 8 est une vue analogue à la figure 4 dans laquelle les volets sont en position réfléchissante ;
- la figure 9 est une vue en coupe suivant la ligne IX-IX de la figure 8 ;
- la figure 10 est une vue en coupe suivant la ligne X-X de la figure 8 ;
- la figure 11 est une vue en coupe suivant la ligne XI-XI de la figure 8 ;
- la figure 12 est une vue en coupe partielle d'un dispositif de transfert thermique selon une deuxième forme de réalisation de l'invention qui est implanté sous une toiture inclinée ;
- la figure 13 est une vue en coupe partielle d'un dispositif de transfert thermique selon une troisième forme de réalisation de l'invention, analogue à celle de la figure 12, dans laquelle le dispositif de transfert thermique est implanté sous une toiture plate ;
- la figure 14 est une vue de face d'un dispositif de transfert thermique selon une quatrième forme de réalisation de l'invention ;
- la figure 15 est une vue en coupe suivant la ligne XV-XV de la figure 14 ;
- la figure 16 est une vue arrière du dispositif de transfert thermique de la figure 14 ;
- la figure 17 est une vue en coupe suivant la ligne XVII-XVII de la figure 14 ;
- les figures 18A et 18B sont des vues schématiques en coupe d'un ensemble formé d'une surface à absorption variable et de volets mobiles en translation dans deux positions respectives des volets ;
- les figures 19A et 19B sont des vues analogues aux figures 18A et 18B dans une variante de réalisation ;
- les figures 20A, 20B et 20C sont des vues schématiques en coupe d'un ensemble formé d'une surface à absorption variable et de volets inclinés mobiles en translation dans trois positions respectives des volets ; et
- les figures 21A, 21B et 21C sont des vues analogues aux figures 20A, 20B et 20C dans une variante de réalisation.

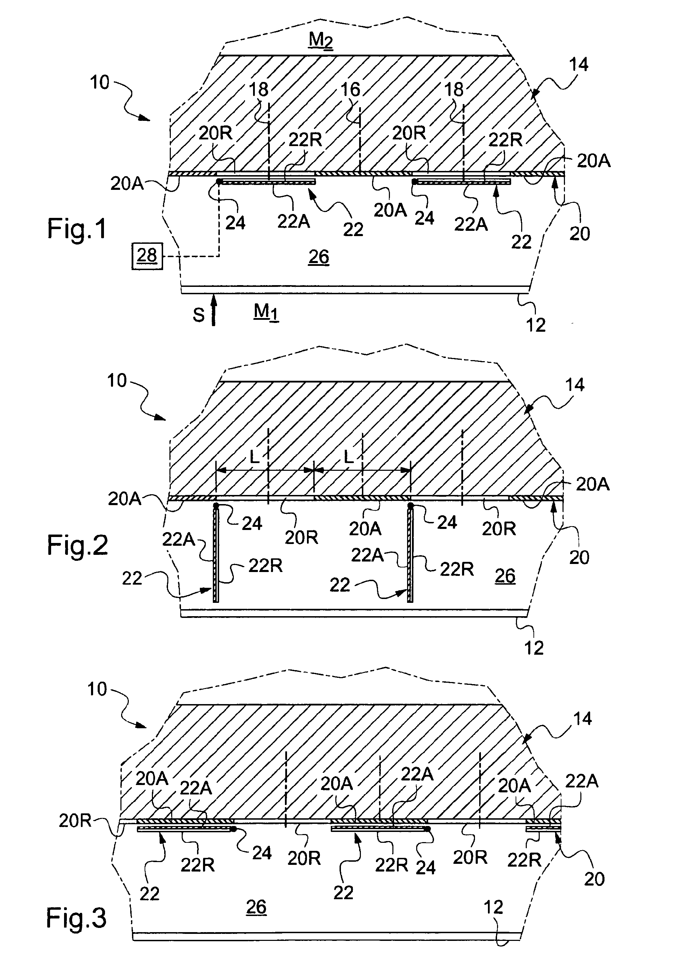

On se réfère d'abord à la figure 1 qui montre, en vue en coupe partielle, un dispositif de transfert thermique 10 selon l'invention comprenant une paroi transparente 12 (par exemple en verre minéral ou organique) en contact avec une première masse thermique M₁, à savoir le milieu ambiant extérieur, et propre à être exposée au rayonnement solaire S.

Un module isolant 14 est placé entre la paroi transparente et une seconde masse thermique M₂ à chauffer ou refroidir, cette seconde masse thermique étant par exemple une partie (mur ou toiture) d'un bâtiment, etc qu'il convient de chauffer ou de refroidir.

Le module isolant 14 est avantageusement réalisé en laine minérale et il comporte des passages de circulation 16, 18 pour un fluide caloporteur (habituellement de l'air) autorisant ou non un transfert thermique entre la première masse thermique M₁ et la seconde masse thermique M₂. Ici, les passages de circulation 16, 18 sont schématisés uniquement par leurs axes respectifs.

Selon l'invention, le dispositif comprend en outre une surface à absorption variable 20 interposée entre la paroi transparente 12 et le module isolant 14. Cette surface 20 est adossée au module isolant 14 pour pouvoir être exposée au rayonnement solaire S au travers de la paroi transparente 12. La surface 20 présente des régions absorbantes 20A alternant avec des régions réfléchissantes 20R.

Des volets mobiles 22 montés chacun pivotant autour d'un axe respectif 24 sont disposés en regard de la surface à absorption variable 20 dans un espace 26, appelé espace extérieur, qui est délimité entre la surface 20 et la paroi transparente 12. Cet espace extérieur est d'une largeur suffisante pour permettre (voir figure 2) le pivotement des volets 22. L'espace extérieur 26 contient le fluide caloporteur, c'est-à-dire ici de l'air.

Dans la forme de réalisation représentée, les régions absorbantes 20A et les régions réfléchissantes 20R de la surface à absorption variable 20, sont réalisées sous la forme de bandes parallèles de largeur choisie L (figure 2) s'étendant suivant une direction principale choisie, par exemple verticale ou horizontale, et les volets mobiles 22 sont montés pivotant autour de leurs axes respectifs 24, ces derniers étant parallèles à la direction choisie. Dans l'exemple représenté, les régions absorbantes 20A et les régions réfléchissantes 20R ont une même largeur L qui correspond sensiblement à la largeur de chacun des volets mobiles.

Les volets mobiles 22 présentent d'un côté une face absorbante 22A et du côté opposé une face réfléchissante 22R. Ces volets sont déplaçables entre une première position, dite position absorbante, telle que représentée sur la figure 1 et une deuxième position, dite position réfléchissante, telle que représentée sur la figure 3.

Dans la première position, sont exposées à la fois les faces absorbantes 22A des volets et les régions absorbantes 20A de la surface à absorption variable. Ainsi, la surface 20 en combinaison avec les volets 22 forment une surface absorbante pour le rayonnement solaire.

Dans la position intermédiaire représentée sur la figure 2, les volets ont pivoté de sensiblement 90° par rapport à la position de la figure 1.

Dans la position de la figure 3, dite position réfléchissante, les volets ont pivoté de sensiblement 180° par rapport à la position de la figure 1. Dans cette position, sont exposées à la fois les faces réfléchissantes 22R des volets et les régions réfléchissantes 20R de la surface à absorption variable 20.

Comme on peut le voir sur la figure 1, dans la première position, les faces réfléchissantes 22R des volets viennent en vis-à-vis des régions réfléchissantes 20R de la surface à absorption variable pour les occulter. En revanche, dans la deuxième position (figure 3) les faces absorbantes 22A des volets 22 viennent en vis-à-vis des régions absorbantes 20A de la surface à absorption variable 20 pour les occulter.

Ainsi, les volets 22 sont propres à pivoter chacun de sensiblement de 180° de la première position (figure 1) à la deuxième position (figure 3), ou inversement. Dans la première position, chaque volet vient occulter une région réfléchissante 20R de la surface à absorption variable. Dans la deuxième position (figure 3) chaque volet vient occulter une région absorbante 20A immédiatement adjacente à ladite région réfléchissante.

Les régions absorbantes 20A de la surface à absorption variable 20 et les faces absorbantes 22A des volets sont avantageusement en une couleur foncée, en particulier une couleur noire. Les régions absorbantes 20A et les faces absorbantes 22A sont représentées schématiquement sur les figures 1 à 3 sous la forme de zones hachurées de faible épaisseur pour pouvoir les identifier.

Les régions réfléchissantes 20R de la surface à absorption variable 20 et les faces réfléchissantes 22R des volets sont avantageusement en une couleur claire, en particulier une couleur blanche. Les régions réfléchissantes 20R et les faces réfléchissantes 22R sont représentées schématiquement sur les figures 1 à 3 sous la forme de zones non hachurées de faible épaisseur pour pouvoir les identifier.

Les régions et faces absorbantes, de même que les régions et faces réfléchissantes, peuvent être réalisées par tout moyen approprié, en particulier par peinture, application d'un revêtement, etc.

Le dispositif comprend avantageusement un actionneur 28 à commande manuelle ou motorisée (figure 1) pour déplacer les volets 22 en synchronisme.

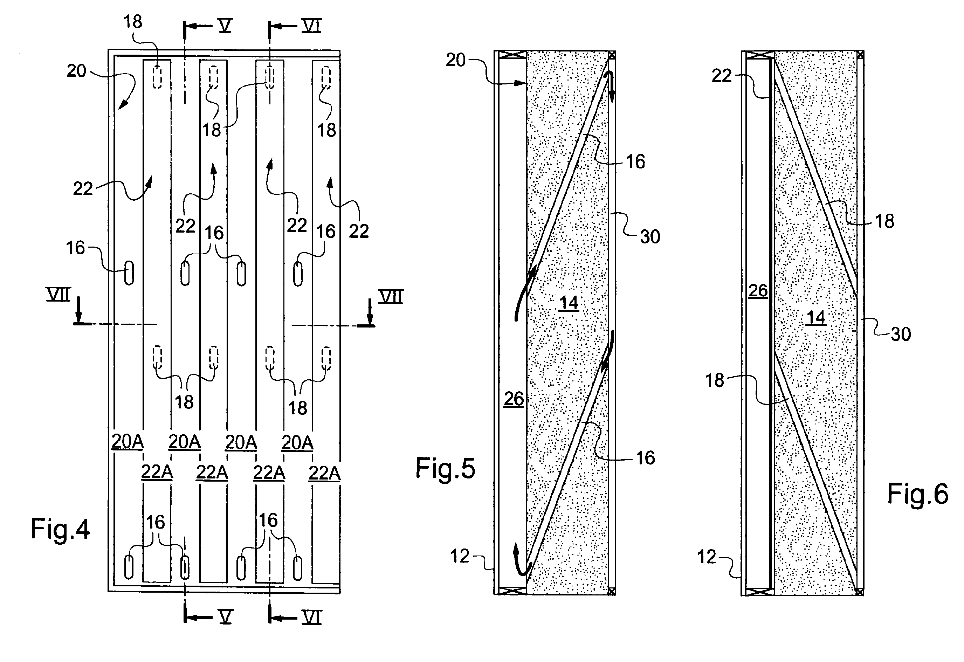

On se réfère maintenant aux figures 4 à 7 pour décrire une première forme d'un dispositif de transfert thermique selon l'invention utilisant une surface à absorption variable 20 et des volets 22 comme décrit précédemment.

Les passages de circulation traversant le module isolant 14 comprennent des premiers canaux de circulation 16 reliant l'espace extérieur 26 de fluide caloporteur et un espace intérieur 30 de fluide caloporteur disposé en contact avec la seconde masse thermique M2. Les espaces 26 et 30 s'étendent de part et d'autre du bloc isolant 14 dans des directions sensiblement parallèles et verticales dans l'exemple représenté. Les premiers canaux de circulation 16 débouchent dans des régions absorbantes 20A de la surface à absorption variable 20 et ils traversent de façon ascendante le module isolant en partant des régions absorbantes respectives (voir figure 5). Deux canaux 16 superposés verticalement débouchent à chaque fois dans une région absorbante 20A.

Les passages de circulation comprennent en outre des seconds canaux de circulation 18 qui relient l'espace extérieur 26 de fluide caloporteur et l'espace intérieur 30 de fluide caloporteur. Ces second canaux de circulation, débouchent dans des régions réfléchissantes 20R de la surface à absorption variable 20 et ils traversent de façon descendante le module isolant en partant des régions réfléchissantes (figure 6). Deux canaux 18 superposés verticalement débouchent à chaque fois dans une région réfléchissante 20R.

Dans la position absorbante des figures 4 à 7, sont exposées les régions absorbantes 20A de la surface à absorption variable et les faces absorbantes 22A des volets mobiles. Ces derniers viennent découvrir les canaux 16 et obturer les canaux 18. Ainsi, dans la position absorbante des volets, les premiers canaux de circulation 16 sont ouverts, tandis que les seconds canaux de circulation sont fermés. Il en résulte que le fluide caloporteur peut circuler à chaque fois dans une boucle fermée, comme montré par les flèches de la figure 5. Du fait que le fluide caloporteur est échauffé dans l'espace 26, il a tendance à monter en empruntant les canaux 16 dirigés ascendant pour transférer de la chaleur dans l'espace intérieur 30 par circulation naturelle.

Le fonctionnement s'effectue ici de façon analogue à celui décrit dans la publication EP 1 216 388 déjà citée. En absence de rayonnement solaire, quand l'espace 26 est plus froid que l'espace 30, le mouvement du fluide s'arrête et le module 14 devient un isolant thermique. Ce fonctionnement est particulièrement intéressant en hiver pour transférer de la chaleur à la seconde masse thermique M₂ qui peut être par exemple un mur d'un bâtiment.

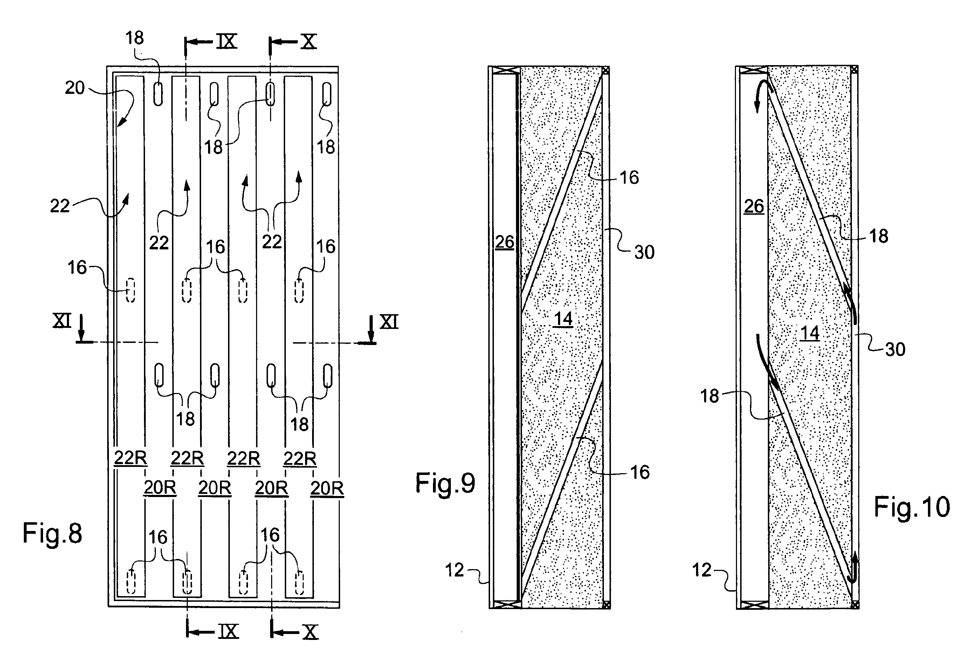

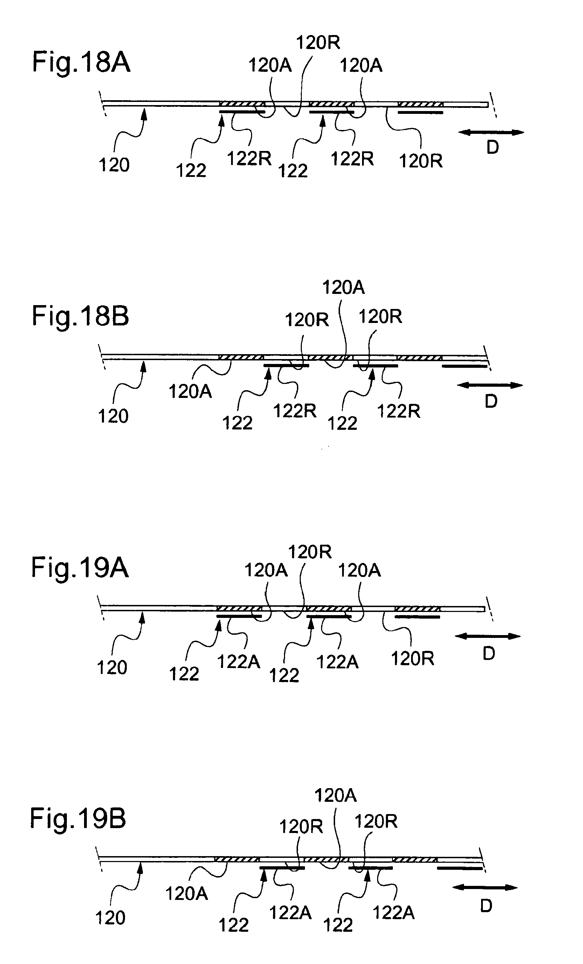

Les figures 8 à 11 montrent le module isolant dans la deuxième position, c'est-à-dire dans la position réfléchissante des volets. Dans cette position, seules sont exposées les régions réfléchissantes 20R de la surface 20 et les faces réfléchissantes 22R des volets. Par ailleurs, les premiers canaux de circulation 16 sont fermés par les volets, tandis que les seconds canaux de circulation 18 sont ouverts. Il en résulte que seule une circulation d'air peut s'effectuer de façon naturelle dans les différentes boucles comme montré sur la figure 18. Cette configuration est intéressante en été, car l'air plus chaud qui se trouve du côté de la masse M₂, c'est-à-dire dans l'espace intérieur 30, a tendance à monter en empruntant les canaux 18 pour se diriger vers l'espace extérieur 26 en transférant ainsi de la chaleur de la seconde masse thermique M₂ vers la première masse thermique M₁. Là aussi, le principe de circulation est analogue à celui décrit dans la publication EP 1 216 388 déjà citée.

Dans la forme de réalisation des figures 5 à 11, la seconde masse thermique M₂ est avantageusement une paroi généralement verticale d'un bâtiment, par exemple un mur extérieur. Le dispositif 10 est alors adossé dans une direction généralement verticale le long de la paroi du bâtiment, tandis que la paroi transparente 12 et le module isolant 14 s'étendent également dans cette direction verticale.

Dans la forme de réalisation des figures 5 à 11, le module isolant est avantageusement formé dans une laine minérale, par exemple dans une laine de roche, et les canaux de circulation 16 et 18 sont avantageusement percés directement dans l'épaisseur du module isolant pour le traverser de part en part et déboucher dans l'espace extérieur 26 et l'espace intérieur 30.

Dans la forme de réalisation représentée, les régions absorbantes 20A et les régions réfléchissantes 20R de la surface 20 sont réalisées sous la forme de bandes parallèles étroites. Dans les régions absorbantes 20A débouchent à chaque fois deux canaux 16 superposés, tandis que dans les régions réfléchissantes 20R débouchent à la fois deux canaux 18 superposés.

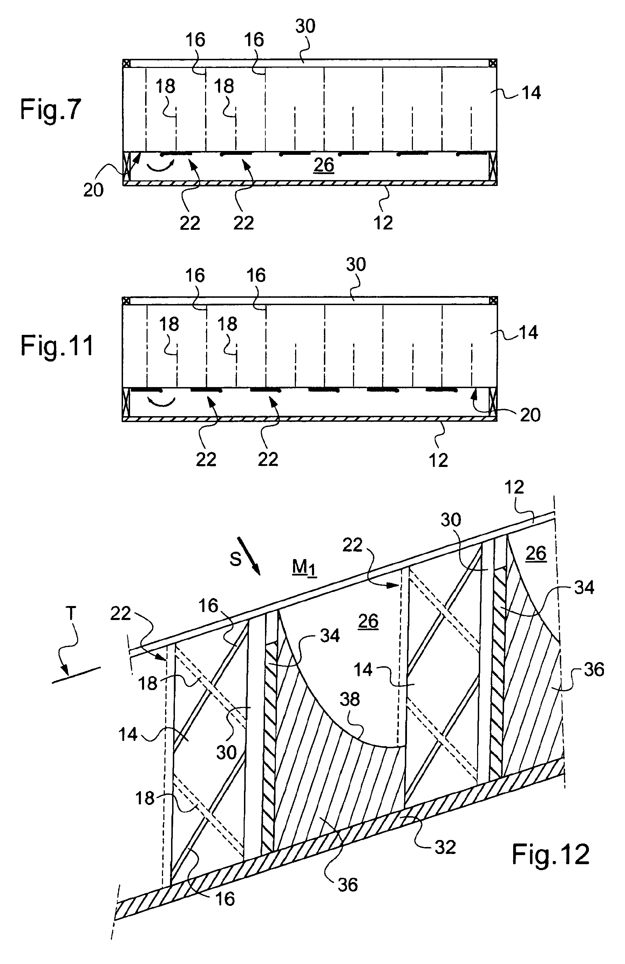

On se réfère maintenant à la figure 12 qui montre l'utilisation d'un dispositif de transfert thermique selon l'invention dans le cas d'une toiture T inclinée. La seconde masse thermique M₂ est ici une paroi interne 32 disposée sous la toiture et formant par exemple une structure de plafond pour une pièce à l'intérieur du bâtiment.

La paroi transparente 12 du dispositif de transfert thermique 10 est prévue pour s'intégrer dans la pente de la toiture, tandis que le module isolant 14 est adapté pour s'étendre dans une direction généralement verticale en étant disposé à chaque fois entre la paroi transparente 12 et la paroi interne 32. Dans l'exemple, on peut prévoir plusieurs modules isolants 14 disposés à distance les uns des autres. Chacun des modules isolants comprend, comme dans la forme de réalisation précédente, des canaux de circulation 16 dirigés ascendants depuis la surface 20 à absorption variable jusqu'à la face opposée. Le module comprend en outre des canaux 18 dirigés de façon descendante.

En vis-à-vis de la surface à absorption variable 20, sont disposés une pluralité de volets mobiles 22 représentés ici de façon schématique. Le rayonnement solaire S qui traverse la paroi transparente 12 vient échauffer le fluide caloporteur, ici de l'air, contenu dans un espace extérieur 26 qui communique avec un espace intérieur 30 au travers des canaux précités. A chaque fois, cet espace intérieur 30 est limité par un élément thermo-conducteur 34 disposé en position sensiblement verticale et relié en contact thermique avec la paroi interne 32. Cet élément thermo-conducteur peut être par exemple une ailette conductrice de chaleur.

Par ailleurs, l'espace 26 est délimité par un bloc isolant 36 adossé à un élément thermo-conducteur 34 adjacent et limitant une paroi concave 38 qui contribue à renvoyer le rayonnement solaire S en direction de la surface à absorption variable 20.

Le dispositif de transfert thermique de la figure 12 fonctionne de manière analogue à celui de la forme de réalisation précédente.

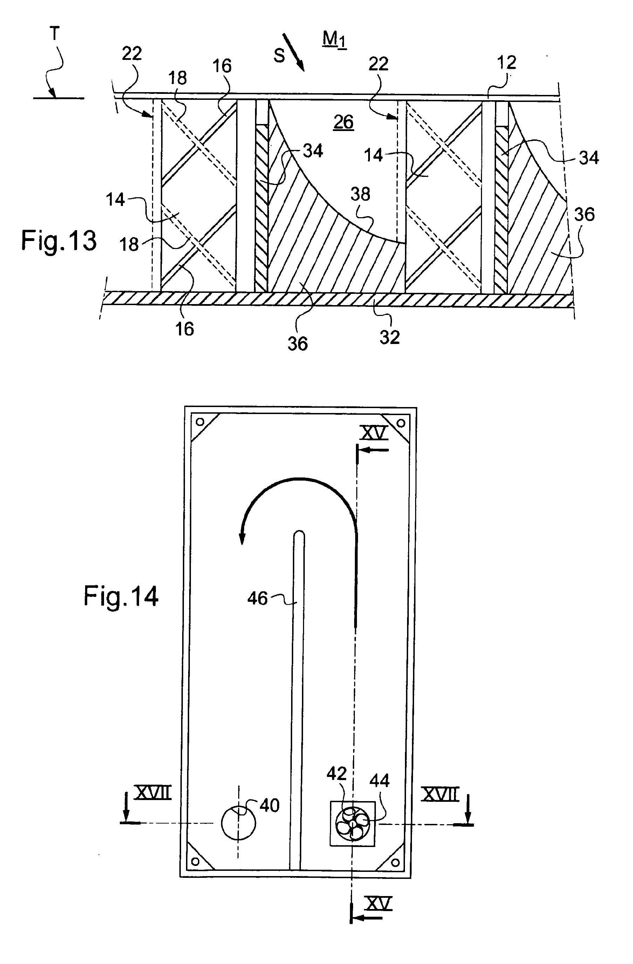

On se réfère maintenant à la figure 13 qui montre un dispositif de transfert thermique analogue à celui de la figure 12, sauf que la toiture T est ici une toiture plate. Il en résulte que la paroi transparente 12, de même que la paroi interne 32 sont sensiblement horizontales. Comme dans la forme de réalisation précédente, les modules isolants 14 sont implantés verticalement, de même que les éléments thermo-conducteurs 34.

Dans les formes de réalisation précédentes, la circulation du fluide caloporteur, généralement de l'air, s'effectue par convection naturelle.

On se réfère maintenant aux figures 14 à 17 qui montrent une autre forme de réalisation de l'invention qui utilise le principe de transfert thermique décrit dans la publication EP 1 060 353 déjà citée et fonctionne avec une circulation forcée du fluide caloporteur.

Le dispositif de transfert thermique des figures 14 à 17 comprend un module isolant 14 qui forme séparation entre un espace extérieur 26 délimité par la paroi transparente 12, qui est en contact avec une première masse thermique M₁ et un espace intérieur 30 délimité par la seconde masse thermique M₂ à chauffer.

Les passages de circulation comprennent deux ouvertures 40 et 42 qui traversent le module isolant de part en part et sont situées à la même hauteur mais décalées dans la direction de la largeur. L'une de ces deux ouvertures, à savoir l'ouverture 42, est munie d'un ventilateur 44 à commande pilotée pour réaliser une circulation forcée du fluide caloporteur entre l'espace extérieur 26 et l'espace intérieur 30 ou inversement.

L'espace intérieur 26 est délimité sur une partie de sa hauteur par une cloison partielle 46 dirigée verticalement, tandis que l'espace intérieur 30 est délimité également, sur une partie de sa hauteur, par une cloison partielle 48.

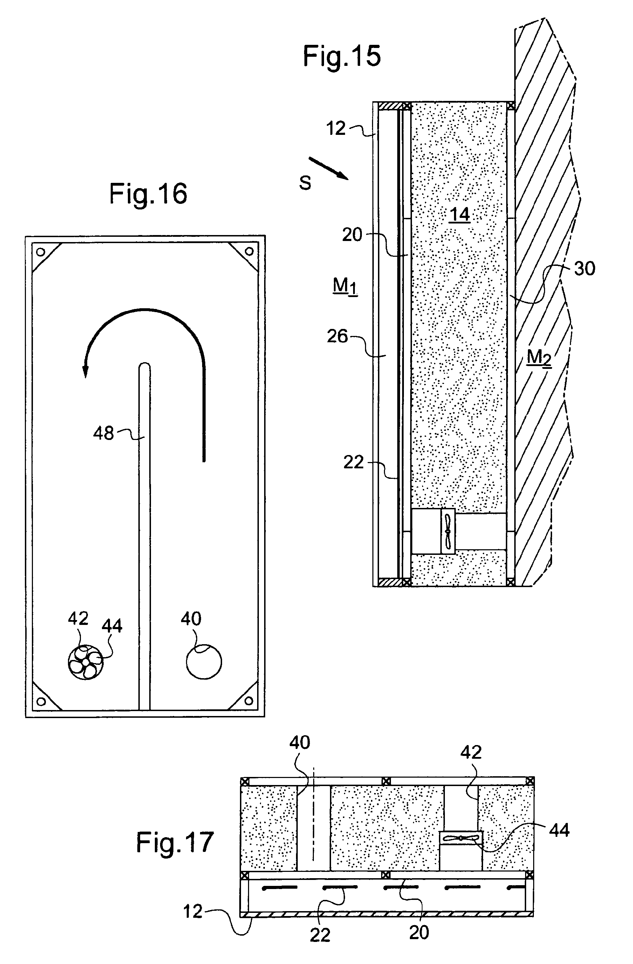

Ceci permet de définir à chaque fois un trajet de circulation en U pour le fluide caloporteur comme représenté par les flèches sur les figures 14 et 16.

Comme dans le dispositif selon la publication EP 1 060 353, le ventilateur est susceptible d'être placé sélectivement dans au moins l'un des états suivants :
- un état ouvert (ventilateur en marche) autorisant une circulation d'air entre l'espace extérieur et l'espace intérieur et permettant ainsi un transfert thermique entre la masse thermique M₁ et la masse thermique M₂ ; et
- un état fermé (ventilateur à l'arrêt) interdisant une circulation d'air entre l'espace extérieur 26 et l'espace intérieur 30 et empêchant ainsi un transfert thermique entre les masses thermiques M₁ et M₂.

Comme on le voit sur les vues en coupe des figures 15 et 17, le dispositif de transfert comporte aussi en avant du module isolant une surface à absorption variable 20 destinée à recevoir les rayonnements solaires S ayant traversé la paroi transparente 12. En avant de cette surface 20 sont disposés des volets 22 analogue à ceux décrits précédemment et susceptibles d'être déplacés de l'une à l'autre de deux positions comprenant une position absorbante et une position réfléchissante. Dans l'exemple Les volets sont montés pivotants autour d'axes respectifs verticaux.

Dans la forme de réalisation des figures 18A et 18B, la surface à absorption variable 120 présente des régions absorbantes 120A alternant avec des régions réfléchissantes 120R. Ces régions 120A et 120R sont analogues aux régions 20A et 20B décrites plus haut et sont réalisées sous la forme de bandes parallèles verticales. Les volets mobiles 122 présentent chacun une face réfléchissante 122R et sont déplaçables en translation entre une première position (figure 18A) où sont exposées les faces réfléchissantes 122R des volets 122 et les régions réfléchissantes 120R de la surface à absorption variable 120 et une deuxième position (figure 18B) où sont exposées les faces réfléchissantes 122R des volets 122 et les régions absorbantes 120A de la surface à absorption variable 120.

Ainsi, l'ensemble formé par la surface 120 et les volets 122 est 100% réfléchissant dans la position de la figure 18A, et 50% absorbant et 50% réfléchissant dans la position de la figure 18B. Les volets 122 ont sensiblement la même largeur que les régions 120A et 120B et sont déplaçables conjointement en translation dans une direction D parallèle au plan de la surface 120. Ce déplacement en translation est effectué au moyen d'un actionneur (non représenté) qui réalise un coulissement. Chaque volet présente seulement une face réfléchissante 122R qui est en permanence exposée au rayonnement solaire.

La variante de réalisation des figures 19A et 19B est proche de celles des figures 18A et 18B, sauf que chaque volet présente seulement une face absorbante 122A qui est en permanence exposée au rayonnement solaire. La surface à absorption variable 120 présente des régions absorbantes 120A alternant avec des régions réfléchissantes 120R. Les volets mobiles 122 sont déplaçables en translation entre une première position où sont exposées les faces absorbantes 122A des volets 122 et les régions réfléchissantes 120R de la surface à absorption variable 120 (figure 19A) et une deuxième position où sont exposées les faces absorbantes 122A des volets 122 et les régions absorbantes 120A de la surface à absorption variable 120.

Ainsi, l'ensemble formé par la surface 120 et les volets 122 est 50% absorbant et 50% réfléchissant dans la position de la figure 19A, et 100% absorbant dans la position de la figure 19B.

Les modes de réalisation des figures 18A et 18B et des figures 19A et 19B conviennent à des modules isolants ayant soit des passages de circulation naturelle du fluide caloporteur, comme décrit précédemment en référence aux figures 4 à 13, soit des passages de circulation forcée comme décrit précédemment en référence aux figures 14 à 17.

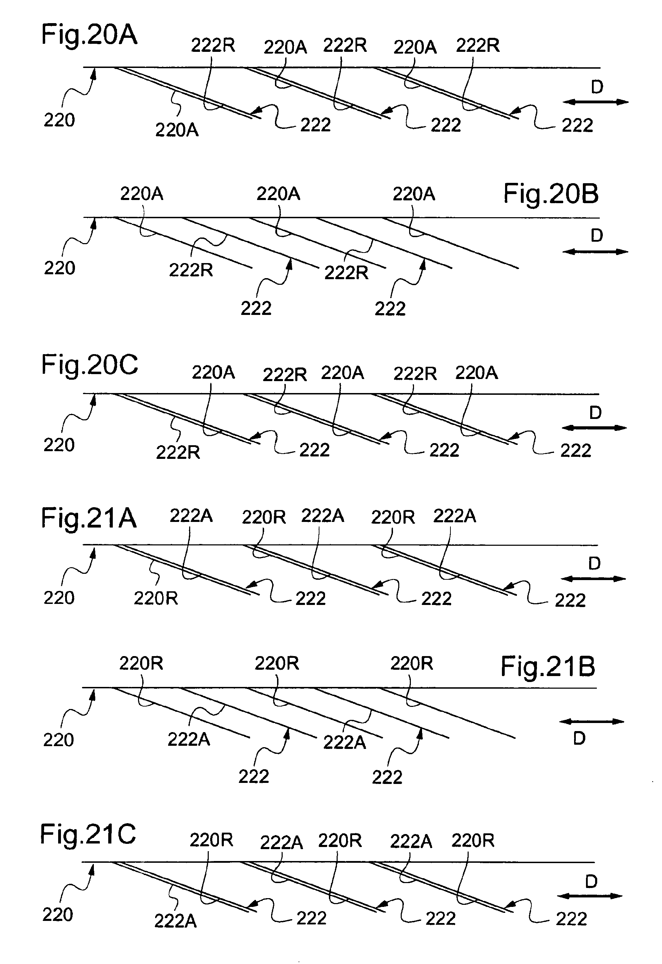

Dans la forme de réalisation des figures 20A à 20C, la surface à absorption variable 220 présente des régions absorbantes 220A espacées deux à deux et disposées obliquement par rapport à une direction D qui est parallèle au plan de la surface 20. Chacune des régions absorbantes 220A forme un angle aigu avec la surface 220 à laquelle elle se rattache, l'ensemble étant formé par exemple de tôles soudées.

Les volets mobiles 222 sont disposés obliquement et présentent chacun une face réfléchissante 222R et sont déplaçables en translation dans la direction D entre une première position (figure 20A) où sont exposées les régions absorbantes 220A de la surface à absorption variable 220 et une deuxième position (figure 20C) où sont exposées les faces réfléchissantes 222R des volets 222.

Les volets 222 sont rattachés à un support commun (non représenté) qui coulisse dans la direction D et forment chacun le même angle avec cette direction. L'ensemble ainsi constitué est 100% absorbant dans la position de la figure 20A et 100% réfléchissant dans la position de la figure 20C. La figure 20B représente une position intermédiaire qui, en principe, n'a pas de rôle fonctionnel.

Dans la variante de réalisation des figures 21A à 21C, la surface 220 présente des régions réfléchissantes 220R espacées deux à deux et disposées obliquement par rapport à la direction choisie D. Les volets mobiles 222 sont disposés obliquement et présentent chacun une face absorbante 222R. Ils sont déplaçables en translation dans la direction D entre une première position (figure 21A) où sont exposées les régions réfléchissantes 220R de la surface à absorption variable 220 et une deuxième position (figure 21C) où sont exposées les faces absorbantes 222A des volets 222. La figure 21B représente une position intermédiaire qui, en principe, n'a pas de rôle fonctionnel. L'ensemble ainsi constitué est 100% réfléchissant dans la position de la figure 21A et 100% absorbant dans la position de la figure 21C.

Les modes de réalisation des figures 20A et 20B et des figures 21A et 21B conviennent principalement à un module isolant ayant des passages de circulation forcée du fluide caloporteur comme décrit précédemment en référence aux figures 14 à 17.

L'invention est susceptible de nombreuses variantes de réalisation et n'est pas limitée aux formes de réalisation particulières décrites précédemment.

Ainsi les volets mobiles peuvent être réalisés pivotants ou coulissants et leur orientation peut être verticale ou horizontale.

Le dispositif de l'invention peut être réalisé sous forme d'élément modulaire prêt à installer et présentant des dimensions choisies, par exemple un élément rectangulaire de 0,60m x 1,00m, ces dimensions étant données à titre indicatif.

L'invention trouve une application générale dans le domaine du bâtiment, en particulier pour le chauffage de locaux par temps froid et le refroidissement de locaux par temps chaud.

## Revendications

1. Dispositif de transfert thermique, comprenant une paroi transparente (12) en contact avec une première masse thermique (M₁) et propre à être exposée aux rayonnements solaires (S), un module isolant (14) placé entre la paroi transparente (12) et une seconde masse thermique (M₂) à chauffer ou refroidir, le module isolant (14) comportant des passages de circulation (16, 18) pour un fluide caloporteur autorisant ou non un transfert thermique entre la première masse thermique (M₁) et la seconde masse thermique (M₂),
**caractérisé en ce qu'**il comprend une surface à absorption variable (20 ; 120 ; 220) interposée entre la paroi transparente (12) et le module isolant (14), ladite surface à absorption variable étant exposée aux rayonnements solaires (S) au travers de la paroi transparente (12) et présentant des régions absorbantes (20A ; 120A ; 220A) et/ou des régions réfléchissantes (20R ; 120R ; 220R), ainsi que des volets mobiles (22 ; 122 ; 222) disposés en regard de la surface à absorption variable (20 ; 120 ; 220) et présentant chacun une face absorbante (22A ; 122A ; 222A) et/ou une face réfléchissante (22R ; 122R ; 222R), ces volets étant déplaçables entre au moins une première position et une deuxième position pour faire varier les régions absorbantes et/ou les régions réfléchissantes ainsi que les faces absorbantes et/ou les faces réfléchissantes exposées aux rayonnements solaires.

2. Dispositif de transfert thermique selon la revendication 1, **caractérisé en ce que** la surface à absorption variable (20) présente des régions absorbantes (20A) alternant avec des régions réfléchissantes (20R), **en ce que** les volets mobiles (22) présentent chacun une face absorbante (22A) et une face réfléchissante (22R) opposées, ces volets étant déplaçables entre une première position, dite position absorbante, où sont exposées les faces absorbantes (22A) des volets (22) et les régions absorbantes (20A) de la surface à absorption variable (20) et une deuxième position, dite position réfléchissante, où sont exposées les faces réfléchissantes (22R) respectives des volets (22) et les régions réfléchissantes (20R) de la surface à absorption variable (20).

3. Dispositif de transfert thermique selon la revendication 2, **caractérisé en ce que,** dans la première position, les faces réfléchissantes (22R) des volets (22) viennent en vis-à-vis des régions réfléchissantes (20R) de la surface à absorption variable (20) pour les occulter, tandis que, dans la deuxième position, les faces absorbantes (22A) des volets (22) viennent en vis-à-vis des régions absorbantes (20A) de la surface à absorption variable (20) pour les occulter.

4. Dispositif de transfert thermique selon l'une des revendications 2 et 3, **caractérisé en ce que** les régions absorbantes (20A) et les régions réfléchissantes (20R) de la surface à absorption variable (20) sont réalisées sous la forme de bandes parallèles de largeur choisie (L) s'étendant suivant une direction principale choisie, et **en ce que** les volets mobiles (22) sont montés pivotants autour d'axes respectifs (24) parallèles à la direction principale choisie.

5. Dispositif de transfert thermique selon la revendication 4, **caractérisé en ce que** les volets mobiles (22) sont propres à pivoter chacun de sensiblement 180° de la première position à la deuxième position, ou inversement, en sorte que dans la première position chaque volet (22) vienne occulter une région réfléchissante (20R) de la surface à absorption variable (20) et que, dans la deuxième position, chaque volet (22) vienne occulter une région absorbante (20A) immédiatement adjacente à ladite région réfléchissante (20R).

6. Dispositif de transfert thermique selon la revendication 1, **caractérisé en ce que** la surface à absorption variable (120) présente des régions absorbantes (120A) alternant avec des régions réfléchissantes (120R), **en ce que** les volets mobiles (122) présentent chacun une face réfléchissante (122R) et sont déplaçables en translation entre une première position où sont exposées les faces réfléchissantes (122R) des volets (122) et les régions réfléchissantes (120R) de la surface à absorption variable (120) et une deuxième position où sont exposées les faces réfléchissantes (122R) des volets (122) et les régions absorbantes (120A) de la surface à absorption variable (120).

7. Dispositif de transfert thermique selon la revendication 1, **caractérisé en ce que** la surface à absorption variable (120) présente des régions absorbantes (120A) alternant avec des régions réfléchissantes (120R), **en ce que** les volets mobiles (122) présentent chacun une face absorbante (122A) et sont déplaçables en translation entre une première position où sont exposées les faces absorbantes (122A) des volets (122) et les régions réfléchissantes (120R) de la surface à absorption variable (120) et une deuxième position où sont exposées les faces absorbantes (122A) des volets (122) et les régions absorbantes (120A) de la surface à absorption variable (120).

8. Dispositif de transfert thermique selon la revendication 1, **caractérisé en ce que** la surface à absorption variable (220) présente des régions absorbantes (220A) espacées deux à deux et disposées obliquement par rapport à une direction choisie (D) et **en ce que** les volets mobiles (222) sont disposés obliquement et présentent chacun une face réfléchissante (222R) et sont déplaçables en translation dans la dite direction donnée (D) entre une première position où sont exposées les régions absorbantes (220A) de la surface à absorption variable (220) et une deuxième position où sont exposées les faces réfléchissantes (222R) des volets (222).

9. Dispositif de transfert thermique selon la revendication 1, **caractérisé en ce que** la surface à absorption variable (220) présente des régions réfléchissantes (220R) espacées deux à deux et disposées obliquement par rapport à une direction choisie (D) et **en ce que** les volets mobiles (222) sont disposés obliquement et présentent chacun une face absorbante (222R) et sont déplaçables en translation dans la dite direction donnée (D) entre une première position où sont exposées les régions réfléchissantes (220R) de la surface à absorption variable (220) et une deuxième position où sont exposées les faces absorbantes (222A) des volets (222).

10. Dispositif de transfert thermique selon l'une des revendications 1 à 9, **caractérisé en ce que** les régions absorbantes (20A ; 120A ; 220A) de la surface à absorption variable (20 ; 120 ; 220) et les faces absorbantes (22A ; 122A ; 222A) des volets (22 ; 122 ; 222) sont en une couleur foncée, en particulier de couleur noire, tandis que les régions réfléchissantes (20R ; 120R ; 220R) de la surface à absorption variable (20 ; 120 ; 220) et les faces réfléchissantes (22R ; 122R ; 222R) des volets (22 ; 122 ; 222) sont en une couleur claire, en particulier de couleur blanche.

11. Dispositif de transfert thermique selon l'une des revendications 1 à 10, **caractérisé en ce qu'**il comprend un actionneur (28) pour déplacer les volets (22 ; 122 ; 222) en synchronisme.

12. Dispositif de transfert thermique selon l'une des revendications 1 à 11, **caractérisé en ce que** les passages de circulation (16, 18) du module isolant (14) autorisent une circulation naturelle du fluide caloporteur.

13. Dispositif de transfert thermique selon la revendication 12, **caractérisé en ce que** les passages de circulation comprennent :
- des premiers canaux de circulation (16) reliant un espace extérieur (26) de fluide caloporteur situé entre la paroi transparente (12) et la surface à absorption variable (20 ; 120) et un espace intérieur (30) de fluide caloporteur disposé en contact avec la seconde masse thermique (M₂), ces premiers canaux de circulation débouchant dans des régions absorbantes (20A ; 120A) de la surface à absorption variable et traversant de façon ascendante le module isolant (14) à partir des régions absorbantes ; et
- des seconds canaux de circulation (18) reliant l'espace extérieur (26) de fluide caloporteur et l'espace intérieur (30) de fluide caloporteur, ces seconds canaux de circulation débouchant dans des régions réfléchissantes (20R ; 120R) de la surface à absorption variable (20 ; 120) et traversant de façon descendante le module isolant (14) à partir des régions réfléchissantes ;
- en sorte que, dans une position absorbante des volets, les premiers canaux de circulation (16) sont ouverts, tandis que les seconds canaux de circulation (18) sont fermés et que, dans une position réfléchissante des volets, les premiers canaux de circulation (16) sont fermés, tandis que les seconds canaux de circulation (18) sont ouverts.

14. Dispositif de transfert thermique selon la revendication 13, **caractérisé en ce que :**
- dans la position absorbante des volets, une circulation naturelle du fluide caloporteur ne s'effectue que si la température du fluide caloporteur dans l'espace extérieur (26) est supérieure à la température du fluide caloporteur dans l'espace intérieur (30), ce qui autorise un transfert thermique de l'espace extérieur vers l'espace intérieur, et
- dans la position réfléchissante des volets, une circulation naturelle du fluide caloporteur ne s'effectue que si la température du fluide caloporteur dans l'espace extérieur (26) est inférieure à la température du fluide caloporteur dans l'espace intérieur (30), ce qui autorise un transfert thermique de l'espace intérieur vers l'espace extérieur.

15. Dispositif de transfert thermique selon l'une des revendications 1 à 14, dans lequel la seconde masse thermique (M₂) est une paroi généralement verticale d'un bâtiment, **caractérisé en ce que** ledit dispositif de transfert (10) est adossé dans une direction généralement verticale le long de la paroi du bâtiment, la paroi transparente (12) et le module isolant (14) s'étendant dans ladite direction.

16. Dispositif de transfert thermique selon l'une des revendications 1 à 14, dans lequel la seconde masse thermique (M₂) est une paroi interne (32) disposée sous une toiture (T) de pente choisie, **caractérisé en ce que** la paroi transparente (12) du dispositif est prévue pour s'intégrer dans la pente de la toiture, tandis que le module isolant (14) est adapté pour s'étendre dans une direction généralement verticale.

17. Dispositif de transfert thermique selon la revendication 16, **caractérisé en ce qu'**il comprend au moins un élément thermoconducteur (34) relié en contact thermique avec la paroi interne (32) et disposé le long du module isolant (14) à l'opposé de la surface à absorption variable (20).

18. Dispositif de transfert thermique selon l'une des revendications 1 à 11, **caractérisé en ce que** les passages de circulation (40, 42) du module isolant (14) autorisent une circulation forcée du fluide caloporteur.

19. Dispositif de transfert thermique selon la revendication 18, **caractérisé en ce que** les passages de circulation comprennent deux ouvertures (40, 42) traversant le module isolant (14), dont l'une (42) est munie d'un ventilateur (44) à commande pilotée, et faisant communiquer un espace extérieur (26) situé entre la paroi transparente (12) et la surface à absorption variable (20) et définissant un trajet de circulation en U pour le fluide caloporteur et un espace intérieur (30) disposé en contact avec la seconde masse thermique (M₂) et définissant un trajet de circulation en U pour le fluide caloporteur, le ventilateur (44) étant susceptible d'être placé sélectivement dans au moins un des états suivants :
- un état ouvert autorisant une circulation de fluide caloporteur entre l'espace extérieur (26) et l'espace intérieur (30) et permettant ainsi un transfert thermique entre la première masse thermique (M₁) et la seconde masse thermique (M₂); et
- un état fermé interdisant une circulation de fluide caloporteur entre l'espace extérieur (26) et l'espace intérieur (30) et empêchant ainsi un transfert thermique entre la première masse thermique (M₁) et la seconde masse thermique (M₂) .

20. Dispositif de transfert thermique selon l'une des revendications 1 à 19, **caractérisé en ce que** le fluide caloporteur est de l'air.
